# EUROPEAN PATENT SPECIFICATION

(11) **EP 4 265 061 B1**
(45) Date of publication and mention of the grant of the patent: **25.09.2024**
(21) Application number: 21815180.1
(22) Date of filing: 17.11.2021
(51) Int. Cl.: H05B 6/70, H05B 6/80, A24F 40/46

(54) **FILLED RESONANT CAVITY FOR OPTIMIZED DIELECTRIC HEATING**
GEFÜLLTER RESONANZHOHLRAUM ZUR OPTIMIERTEN DIELEKTRISCHEN ERWÄRMUNG
CAVITÉ RÉSONANTE REMPLIE POUR UN CHAUFFAGE DIÉLECTRIQUE OPTIMISÉ

(30) Priority: 18.12.2020 EP 20215706
(43) Date of publication of application: 25.10.2023
(73) Proprietor: Philip Morris Products S.A., 2000 Neuchâtel (CH)
(72) Inventor: GONZALEZ FLOREZ, Ana Isabel, 2000 Neuchâtel (CH); GHAZAANY, Tahereh, Shipley Yorkshire BD17 7DW (GB); ROBERTS, Mike, Shipley Yorkshire BD17 7DW (GB)
(74) Representative: Reddie & Grose LLP
(86) International application number: PCT/EP2021/081948
(87) International publication number: WO 2022/128290

(56) References cited:
- EP-A1- 3 747 289
- CN-A- 108 552 614
- KR-A- 20200 079 693
- US-A- 5 998 774
- US-A1- 2019 356 047

## Description

The invention relates to an aerosol-generating device, an aerosol-delivery system, and a method of heating fan aerosol-forming substrate to generate an aerosol therefrom.

There are many different types of personal vaporisers and heat-not-burn products available that generate an inhalable aerosol from an aerosol-forming substrate. Some of these systems heat a liquid composition and others heat a solid tobacco mixture. Almost all available systems heat the aerosol-forming substrate by conduction of heat from a heating element to an aerosol-forming substrate. Most commonly this is achieved by passing an electrical current through an electrically resistive heating element, giving rise to Joule heating of the heating element. Inductive heating systems have also been proposed, in which Joule heating occurs as a result of eddy currents induced in a susceptor heating element.

One problem with these systems is that they give rise to non-uniform heating of the aerosol-forming substrate. The portion of the aerosol-forming substrate closest to the heating element is heated more quickly or to a higher temperature than portions of the aerosol-forming substrate more remote from the heating element. To mitigate this problem, various designs have been used. Some designs use multiple heating elements to provide the ability to distribute heat or to heat different portions of the substrate at different times. Other designs transport only a small portion of the aerosol-forming substrate to a heating element so that only that small portion is vaporised, before transporting another portion of the aerosol-forming substrate to the heating element.

To overcome the difficulties of the above known systems, it has been proposed to use radio-frequency (RF) electromagnetic radiation to impart heat to an aerosol-forming substrate positioned within an aerosol-generating device. Using RF electromagnetic radiation to induce heating of the aerosol-forming substrate provides advantages of providing generally uniform heating of the substrate without requiring direct contact between a heating element and the substrate. However, it has been found that when applied to aerosol-generating devices having a form factor permitting the device to be handheld or portable, the use of RF electromagnetic radiation at commonly found frequencies with the Industrial, Scientific and Medical (ISM) bands can often result in poor power deposition of the radiation with the substrate. [The ISM bands are portions of the radio spectrum reserved internationally for industrial, scientific and medical (ISM) purposes other than telecommunications.] The poor power deposition results in heating of the substrate being insufficient to efficiently evolve aerosol from the substrate, thereby providing a poor user experience to a user of the aerosol-generating device. The poor power deposition and insufficient heating of the substrate is a consequence of the dimensions of the aerosol-generating device necessary to enable the device to be handheld and portable being mismatched with the wavelength composition of the applied RF electromagnetic radiation. By way of example, the use of RF electromagnetic radiation having a frequency of around 2.45 GHz is desirable in an aerosol-generating device, with this frequency being within the ISM band and commonly employed in domestic appliances, such as microwave ovens. However, a frequency of 2.45 GHz corresponds to a wavelength of ~12 centimetres, which far exceeds the dimensions required to enable an aerosol-generating device to be handheld.

It is therefore desired to provide improved heating of an aerosol-forming substrate in an aerosol-generating device through the use of RF electromagnetic heating in a manner which facilitates the device being handheld or portable.

EP 3747289 A1 relates to a microwave heating unit and method, the microwave heating unit having a sample holding and exposing unit configured to receive and hold a sample in a cavity and expose the sample to a microwave radiation field.

According to one aspect of the present disclosure, there is provided an aerosol-generating device for heating an aerosol-forming substrate to generate an aerosol therefrom. The device comprises an electromagnetic field generator configured to generate radio-frequency (RF) electromagnetic radiation having a predetermined frequency composition; a resonant chamber comprising a peripheral wall configured to be substantially opaque to RF electromagnetic radiation within the resonant chamber; and a filling arranged within an interior of the resonant chamber so as to circumscribe a substrate cavity defined within the resonant chamber, the substrate cavity configured to receive the aerosol-forming substrate. The electromagnetic field generator is coupled to the resonant chamber so as to convey the RF electromagnetic radiation generated by the electromagnetic field generator to the resonant chamber. The filling has a relative permittivity of greater than one.

The relative permittivity εᵣ of the filling refers to the ratio of the absolute permittivity ε of the filling to the vacuum permittivity ε₀. The term relative permittivity εᵣ is also sometimes referred to as the "dielectric constant".

As used herein, the term "aerosol-generating device" refers to a device that interacts with an aerosol-forming substrate of an aerosol-generating article to generate an aerosol. Preferably, the aerosol-generating device is a smoking device that interacts with an aerosol-forming substrate of an aerosol-generating article to generate an aerosol that is directly inhalable into a user's lungs thorough the user's mouth. The aerosol-generating device may be a holder for a smoking article.

Preferably, the aerosol-generating article is a smoking article that generates an aerosol that is directly inhalable into a user's lungs through the user's mouth. More, preferably, the aerosol-generating article is a smoking article that generates a nicotine-containing aerosol that is directly inhalable into a user's lungs through the user's mouth.

As used herein, the term "aerosol-delivery system" refers to a combination of an aerosol-generating device and an aerosol-generating article, in which the aerosol-generating article and the aerosol-generating device cooperate to generate and deliver an aerosol to a user of the system.

As used herein, the term "aerosol-forming substrate" refers to a substrate consisting of or comprising an aerosol-forming material that is capable of releasing volatile compounds upon heating to generate an aerosol.

As used herein, the term radio-frequency (RF) means a frequency between 3 Hz and 3 THz, and includes microwaves. Preferably, the RF electromagnetic field may have a frequency between 500 MHz and 50 GHz, more preferably between 900 MHz to 30 GHz. The RF electromagnetic field may have a frequency between 900 MHz and 5 GHz. In one preferred example, the RF electromagnetic field may have a frequency of about 2.4 GHz.

In an idealised scenario, the predetermined frequency composition of the RF electromagnetic radiation provided to the resonant chamber would correspond to a fundamental resonant frequency of the resonant chamber. This scenario would result in standing waves of the RF electromagnetic radiation being established within the resonant chamber. The amplitude of the standing waves at the fundamental frequency would be greatest well away from the peripheral wall of the chamber. By way of example, for a resonant chamber having a cylindrical peripheral wall, the standing waves at the fundamental resonant frequency would have a maximum amplitude along a longitudinal axis of the cylindrical peripheral wall. Locating the substrate along or nearby the longitudinal axis and away from the peripheral wall of the resonant chamber would therefore help to facilitate efficient coupling of the standing waves of RF electromagnetic radiation with the substrate, resulting in efficient heating of the substrate.

The provision of a filling having a relative permittivity εᵣ of greater than one within the interior of the resonant chamber has been found to have a beneficial effect of reducing the resonant frequency of the resonant chamber compared to the same resonant chamber lacking any filling (i.e. relative to a resonant chamber which is entirely hollow and contains only air). In general terms, for a resonant chamber of a given size, the greater the relative permittivity εᵣ of the filling, the smaller the resonant frequency of the resonant chamber. So, where the resonant chamber has a size consistent with the aerosol-generating device being handheld and portable, the filling which is used can be selected to tune the resonant frequency of the resonant chamber to correspond with the predetermined frequency composition for the RF electromagnetic radiation generated by the electromagnetic field generator. Having the filling arranged within the interior of the resonant chamber so as to circumscribe the substrate cavity helps to keep the substrate positioned away from the peripheral wall of the resonant chamber. This, in turn, helps to increase coupling of the substrate with any standing waves of RF electromagnetic radiation established within the chamber. These advantages can be achieved without having to use RF electromagnetic radiation at excessively high frequencies, therefore reducing the design complexity for electromagnetic field generation. The predetermined frequency composition may consist of a single frequency, or a plurality of discrete frequencies. By way of example, the use of the filling may allow an aerosol-generating device employing RF electromagnetic radiation at a predetermined frequency of 2.45 GHz to efficiently heat an aerosol-forming substrate located inside the substrate cavity, whilst still enabling the aerosol-generating device to retain dimensions suitable for being handheld and portable.

Advantageously, the relative permittivity εᵣ of the filling, the predetermined frequency composition, and dimensions of the resonant chamber are configured such that, in use, the RF electromagnetic radiation having the predetermined frequency composition resonates within the interior of the resonant chamber. In this manner, efficient heating by the RF electromagnetic radiation of aerosol-forming substrate located within the substrate cavity of the resonant chamber is promoted. Preferably, this resonance occurs at a fundamental resonance frequency of the resonant chamber. However, in alterative embodiments, the resonance may occur at one of the overtones or harmonic frequencies for the resonant chamber.

The filling may consist of or comprise a dielectric. Conveniently, the filling has a relative permittivity, εᵣ, of between 5 and 100. Advantageously, the filling has a relative permittivity of between 40 and 50. The filling may comprise or consist of at least one of: alumina, MgNb₂O₆, ZnNb₂O₆, MgTa₂O₆, ZnTa₂O₆, and glass; the table below details values of relative permittivity εᵣ for these exemplary filling materials:

| **Filling material** | **Relative Permittivity, εᵣ** |
|---|---|
| Alumina | 9.3 - 11.5 |
| MgNb₂O₆ (ceramic) | 21 |
| ZnNb₂O₆ (ceramic) | 25 |
| MgTa₂O₆ (ceramic) | 28 |
| ZnTa₂O₆ (ceramic) | 38 |
| Glass | 3.7 - 10 |

Preferably, the aerosol-generating device comprises an air inlet configured to receive air from outside of the aerosol-generating device. The aerosol-generating device may further comprise a fluid flow path extending between the air inlet and the resonant chamber such that such that application of a negative pressure differential between the substrate cavity and the air inlet induces a flow of external air in through the air inlet, along the fluid flow path, and into the substrate cavity. By way of example, the negative pressure differential may be applied by a user drawing on a mouth end of an aerosol-generating article containing aerosol-forming substrate, with the article positioned so that the aerosol-forming substrate is located within the substrate cavity of the aerosol-generating device. So, a user drawing on the mouth end of the aerosol-generating article would cause air to be drawn in through the air inlet and along the fluid flow path of the device, into the resonant chamber, and then into an interior of the aerosol-generating article to pass through the aerosol-forming substrate of the article. Aerosol evolved from the substrate by the heating action of the RF electromagnetic radiation inside the resonant chamber would be carried towards the mouth of the user.

Conveniently, the filling comprises a sleeve arranged so as to continuously circumscribe the substrate cavity. The provision of the filling in the form of a sleeve may enable the filling to form an interior surface of the substrate cavity to provide support to an aerosol-forming substrate positioned within the substrate cavity. However, in an alternative example, the filling may comprise a plurality of discrete clusters spaced apart from each other to as to discontinuously circumscribe the substrate cavity.

A periphery of the substrate cavity may defined by a liner configured to be substantially transparent to RF electromagnetic radiation, the liner located between the filling and the substrate cavity. The use of such a liner may help to avoid the filling becoming damaged on insertion or removal of aerosol-forming substrate from the cavity, whilst still enabling the passage of RF electromagnetic radiation into the substrate cavity to couple with and act upon the substrate. Preferably, the liner may comprise material substantially transparent to RF electromagnetic radiation. By way of example, the liner may comprise Teflon, high-purity quartz, or polytetrafluoroethylene. These materials are able to withstand high temperatures and provide surfaces that are smooth and easy to clean. Alternatively or in addition, the liner may comprise a plurality of slots arranged so as to, in use, permit entry of the RF electromagnetic radiation into the substrate cavity. The plurality of slots may be provided in a symmetrical or repeating pattern about the substrate cavity, thereby providing advantages of providing RF electromagnetic radiation entering the substrate cavity in a uniform manner about the cavity's periphery. The plurality of slots may allow the liner to be fabricated from a material being opaque to RF electromagnetic radiation. The choice of material and design for the liner will be influenced by the need to avoid or reduce the liner impeding the passage of RF electromagnetic radiation within the substrate cavity of the resonant chamber.

Having the peripheral wall of the resonant chamber configured to be substantially opaque to RF electromagnetic radiation within the resonant chamber helps to ensure that RF electromagnetic radiation introduced into the cavity is confined within the cavity during use of the aerosol-generating device. This helps to reduce the possibility that a user of the device is exposed to the RF electromagnetic radiation. Also, efficient heating of substrate positioned within the substrate cavity of the resonant chamber is promoted by the opacity of the peripheral wall of the resonant chamber to RF electromagnetic radiation. The peripheral wall of the resonant chamber may comprise any suitable material that is not transparent to RF electromagnetic radiation, such as aluminium, stainless steel, silver or gold. An interior-facing surface of the peripheral wall may have a polished surface to improve reflection of the RF electromagnetic radiation therefrom within the resonant chamber, thereby also enhancing efficient heating of substrate positioned within the substrate cavity. Materials for the peripheral wall are preferably chosen which act to reflect RF electromagnetic radiation internally within the interior of the resonant chamber, thereby helping to strengthen the coupling of the RF electromagnetic radiation with substrate located in the substrate cavity.

However, minor portions of the peripheral wall of the resonant chamber may be substantially transparent to RF electromagnetic radiation so as to, in use, permit entry of the RF electromagnetic radiation into the resonant chamber. By "minor portions" are meant portions of the peripheral wall which have a cumulative surface area forming less than 20% of the total surface area of the peripheral wall of the resonant chamber. The use of minor portions of the peripheral wall which are transparent to RF electromagnetic radiation helps to facilitate entry inside the interior of the resonant chamber of RF electromagnetic radiation generated by the electromagnetic field generator. However, to promote efficient heating of substrate positioned within the substrate cavity of the resonant chamber, it is preferred to minimise the proportion of the peripheral wall which is formed of such RF-transparent minor portions; for example, the minor portions may have a cumulative surface area forming less than 15%, preferably less than 10%, or preferably less than 5% of the total surface area of the peripheral wall of the resonant chamber. The minor portions may comprise a plurality of slots formed in the peripheral wall of the resonant chamber. The plurality of slots may be arranged so as to, in use, permit entry of the RF electromagnetic radiation into the resonant chamber. Preferably, the plurality of slots may be provided in a symmetrical or repeating pattern about the peripheral wall of the resonant chamber, thereby providing advantages of facilitating entry of RF electromagnetic radiation into the resonant chamber in a uniform manner about the chamber's periphery. Alternatively or in addition, the minor portions may comprise material substantially transparent to RF electromagnetic radiation. By way of example, the minor portions may comprise Teflon, high-purity quartz, or polytetrafluoroethylene. Where the minor portions include material substantially transparent to RF electromagnetic radiation, the minor portions can be thought of as "windows" permitting passage there-through of RF electromagnetic radiation, whilst also forming part of the structure of the peripheral wall of the resonant chamber.

The aerosol-generating device may comprise a radiation containment chamber, the radiation containment chamber surrounding the resonant chamber and configured to be substantially opaque to RF electromagnetic radiation. The provision of such a radiation containment chamber helps to provide an additional layer of protection against escape of RF electromagnetic radiation from the resonant chamber. The use of such a radiation containment chamber may be particularly beneficial in examples of the resonant chamber which have minor portions of the chamber's peripheral wall being substantially transparent to RF electromagnetic radiation (as described above). The presence of the radiation containment chamber surrounding the resonant chamber would help to confine, within the confines of the radiation containment chamber, any RF electromagnetic radiation which may have escaped from the interior of the resonant chamber. The radiation containment chamber may comprise any suitable material that is not transparent to RF radiation, such as aluminium, stainless steel, silver or gold.

The aerosol-forming substrate used within the aerosol-generating device may take various forms. The aerosol-forming substrate may comprise a solid. The aerosol-forming substrate may comprise a liquid. The aerosol-forming substrate may comprise a gel. The aerosol-forming substrate may comprise any combination of two or more of a solid, a liquid and a gel. It is preferred that the aerosol-forming substrate comprise polar molecules which are susceptible to dielectric heating, such as under the action of the RF electromagnetic radiation. By way of example, the aerosol-forming substrate may include water, with water being particularly susceptible to dielectric heating. The aerosol-forming substrate may be provided in solid form, but having been soaked in water or another liquid containing polar molecules. In this manner, the RF electromagnetic radiation acts to excite the polar molecules of the water or other liquid, thereby generating heat, with the heat then being imparted to the material of the aerosol-forming substrate.

The aerosol-forming substrate may comprise nicotine, a nicotine derivative or a nicotine analogue. The aerosol-forming substrate may comprise one or more nicotine salts. The one or more nicotine salts may be selected from the list consisting of nicotine citrate, nicotine lactate, nicotine pyruvate, nicotine bitartrate, nicotine pectates, nicotine aginates, and nicotine salicylate.

The aerosol-forming substrate may comprise an aerosol former. As used herein, an "aerosol former" refers to any suitable known compound or mixture of compounds that, in use, facilitates formation of a dense and stable aerosol and that is substantially resistant to thermal degradation at the operating temperature of the aerosol-generating article. Suitable aerosol-formers are well known in the art and include, but are not limited to: polyhydric alcohols, such as triethylene glycol, 1,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. Preferred aerosol formers are polyhydric alcohols or mixtures thereof, such as triethylene glycol, 1 ,3-butanediol and glycerine.

The aerosol-forming substrate may further comprise a flavourant. The flavourant may comprise a volatile flavour component. The flavourant may comprise menthol. As used herein, the term 'menthol' denotes the compound 2-isopropyl-5-methylcyclohexanol in any of its isomeric forms. The flavourant may provide a flavour selected from the group consisting of menthol, lemon, vanilla, orange, wintergreen, cherry, and cinnamon. The flavourant may comprise volatile tobacco flavour compounds which are released from the substrate upon heating.

The aerosol-forming substrate may further comprise tobacco or a tobacco containing material. For example, the aerosol-forming substrate may comprise any of: tobacco leaf, fragments of tobacco ribs, reconstituted tobacco, homogenised tobacco, extruded tobacco, tobacco slurry, cast leaf tobacco and expanded tobacco. Optionally, the aerosol-forming substrate may comprise tobacco powder compressed with an inert material, for example, glass or ceramic or another suitable inert material.

In cases where the aerosol-forming substrate comprises a liquid or a gel, in some embodiments, the aerosol-generating article may comprise an absorbent carrier. The aerosol-forming substrate may be coated on or impregnated into the absorbent carrier. For example, the nicotine compound and the aerosol-former may be combined with water as a liquid formulation. The liquid formulation may, in some embodiments, further comprise a flavourant. Such a liquid formulation may then be absorbed by the absorbent carrier or coated onto the surface of the absorbent carrier. The absorbent carrier may be a sheet or tablet of cellulosic-based material onto which the nicotine compound and the aerosol former may be coated or absorbed. The absorbent carrier may be a metallic, polymer or vegetal foam having liquid retaining and capillary properties and onto which the liquid or gel aerosol-forming substrate is coated or absorbed.

Conveniently, the substrate cavity may be configured to receive a cartridge of the aerosol-forming substrate such that the cartridge is wholly encapsulated within the substrate cavity. The cartridge may consist solely of aerosol-forming substrate; for example, the cartridge may have the form of a plug or a pellet of aerosol-forming substrate. Alternatively, the cartridge may comprise a casing, the casing housing the aerosol-forming substrate. By way of example, the casing may be filled with aerosol-forming substrate in the form of a liquid or a gel. The liquid- or gel-filled casing may be configured to rupture when the liquid or gel is heated by the RF electromagnetic radiation in the substrate cavity of the resonant chamber. The liquid- or gel-filled casing may also comprise one or more valves configured to open when the liquid or gel is heated, with the heating causing expansion of the liquid/gel within the casing and an increase of pressure within the casing. The one or more valves may be configured to open when a user draws air through the aerosol-generating device. It is highly desirable that the casing be formed to be substantially transparent to RF electromagnetic radiation, to thereby avoid disrupting interaction between RF electromagnetic radiation within the resonant chamber and the aerosol-forming substrate. Alternatively, the substrate cavity may be configured as a blind cavity having an open end and a closed end, the substrate cavity configured to receive, via the open end, at least part of the length of an aerosol-generating article comprising the aerosol-forming substrate. In this alternative example, the substrate cavity may be dimensioned to receive elongate aerosol-generating articles resembling a form factor of conventional cigarettes, with a user inhaling aerosol evolved from the substrate of the aerosol-generating article by engaging their mouth with a mouth end of the article.

Preferably, the aerosol-generating device may comprise a mouthpiece in fluid communication with the substrate cavity. The provision of a mouthpiece on the device may allow a user to inhale aerosol evolved from the substrate by engaging their mouth with part of the device, namely the mouthpiece. The provision of a mouthpiece on the aerosol-generating device is particularly advantageous where the substrate cavity is configured to receive a cartridge of the aerosol-forming substrate such that the cartridge is wholly encapsulated within the substrate cavity. The aerosol-generating device may further comprise a radiation shield positioned between the resonant chamber and the mouthpiece, or within the mouthpiece, so as to obstruct the passage of RF electromagnetic radiation from the resonant chamber to outside of the mouthpiece. The provision of such a radiation shield is beneficial in reducing the possibility that a user is directly exposed to RF electromagnetic radiation from the resonant chamber when applying their mouth to the mouthpiece of the device. The radiation shield may be formed of any suitable material which is opaque to RF electromagnetic radiation. By way of example, the radiation shield may comprise any suitable material that is not transparent to RF radiation, such as aluminium, stainless steel, silver or gold. The radiation shield may also be configured to reflect RF electromagnetic radiation. The radiation shield may be fluid-permeable to allow generated aerosol to pass across the shield; by way of example, the radiation shield may comprise a metal mesh. Conveniently, the radiation shield may comprise a labyrinthine flow path positioned between the resonant chamber and the mouthpiece. The use of a labyrinthine flow path may avoid direct line of sight across the radiation shield of RF electromagnetic radiation in the resonant chamber.

The aerosol-generating device may comprise at least one of a waveguide and an antenna configured so as to convey RF electromagnetic radiation generated by the electromagnetic field generator to the resonant chamber.

Advantageously, the electromagnetic field generator may comprise a solid state RF transistor. The use of a solid state RF transistor allows the aerosol-generating device to be made to have a compact form factor, thereby assisting in the device being handheld or portable. The conventional means for producing RF frequency radiation for heating, such as in domestic microwave ovens, is a magnetron. Magnetrons are bulky and require very high voltages to operate, making them unsuitable for a handheld device. Furthermore, magnetrons have a relatively unstable frequency output and have a relatively short service life. In contrast, a solid state RF transistor can provide for consistent operation over many more usage cycles and requires much lower operating voltages. Advantageously, the solid state RF transistor is configured to generate and amplify the RF electromagnetic radiation field. Conveniently, the aerosol-generating device employs a single solid state RF transistor for providing both the generating and amplification of the RF electromagnetic radiation field, thereby reducing the form factor of the device relative to using a plurality of such transistors. The solid state RF transistor may be, for example, a LDMOS transistor, a GaAs FET, a SiC MESFET or a GaN HFET.

The aerosol-generating device may comprise control circuitry and a power source. The control circuitry may be configured to control a supply of power from the power source to the electromagnetic field generator. The control circuitry may comprise a microprocessor, a programmable microprocessor, a microcontroller, or an application-specific integrated chip (ASIC), or other electronic circuitry capable of providing control. The control circuitry may comprise further electronic components. For example, the control circuitry may comprise any of: sensors, switches, display elements. The control circuitry may comprise an RF power sensor. The control circuitry may comprise a power amplifier. The control circuitry may comprise a memory module containing instructions readable by a processor or other component parts of the control circuitry, the instructions used to control operation of the electromagnetic field generator. The power source may comprise a DC power source. The power source may comprise at least one battery. The at least one battery may include a rechargeable lithium ion battery. As an alternative, the power source may be another form of charge storage device, such as a capacitor.

Preferably, the aerosol-generating device may comprise an elongate housing, with the electromagnetic field generator and the resonant chamber provided within an interior of the elongate housing. The use of an elongate housing for the device provides a geometric aspect ratio for the device which facilitates the device being handheld by a user. An elongate profile is also found in conventional cigarettes or cigars, with the use of such a profile for the aerosol-generating device of the present disclosure providing advantages of familiarity to the user of the device. Conveniently, the elongate housing may be generally cylindrical in form.

Advantageously, the resonant chamber and the filling may be concentrically arranged along a length of the elongate housing. Such an arrangement can be beneficial in reducing the form factor of the aerosol-generating device and may permit the size of the elongate housing in a direction normal to a longitudinal axis of the housing (for example, a diameter of the elongate housing where the housing is cylindrical in form) to be kept to a minimum.

As discussed above, the present disclosure facilitates the form factor of the aerosol-generating device being sufficiently small for the device to be handheld or portable. Accordingly, the resonant chamber of the aerosol-generating device may have a diameter of between about 10 millimetres and about 50 millimetres, or more preferably between about 25 millimetres and about 35 millimetres. The resonant chamber may have a length of between about 5 millimetres and about 25 millimetres, or more preferably between about 10 millimetres and about 20 millimetres. The substrate cavity may have a diameter of between about 3 millimetres and about 15 millimetres, or more preferably between about 5 millimetres and about 10 millimetres. The substrate cavity may have a length of between about 5 millimetres and about 25 millimetres, or more preferably between about 10 millimetres and about 20 millimetres. As the resonant chamber is part of the aerosol-generating device, the size of the resonant chamber will be a determining factor in the size of the device. The aerosol-generating device may have a total length between about 30 millimetres and about 150 millimetres. The aerosol-generating device may have an outer diameter of between about 10 millimetres and about 60 millimetres.

The advantageous effects of the filling, as discussed above, have been found to allow the use of RF electromagnetic radiation having a frequency of 2.45 GHz to provide efficient heating of the substrate in the substrate cavity of the resonant chamber of the aerosol-generating device, whilst permitting the device to retain a form factor suitable for the device being handheld or portable. A frequency of 2.45 GHz corresponds to the frequency commonly employed in conventional microwave ovens.

In a second aspect of the present disclosure, there is provided an aerosol-delivery system for delivering aerosol to a user. The system comprises an aerosol-generating device as described in any of the preceding paragraphs and those claims corresponding to the first aspect of the present disclosure. Additionally, the system comprises an aerosol-generating article comprising an aerosol-forming substrate. The aerosol-generating device and the aerosol-generating article are two distinct entities, and may be: i) provided and sold separately and independently of each other, and subsequently brought together to form the aerosol-delivery system; or ii) provided and sold as a kit of parts, which when assembled, forms the aerosol-delivery system.

The aerosol-generating article may be provided as a disposable cartridge containing the aerosol-forming substrate, the cartridge configured to be wholly encapsulated within the substrate cavity. As discussed in relation to the first aspect, the cartridge may consist solely of aerosol-forming substrate; for example, being in the form of a plug or a pellet of aerosol-forming substrate. Alternatively, the cartridge may comprise a casing, the casing housing the aerosol-forming substrate. As also discussed in relation to the first aspect, the casing may be filled with aerosol-forming substrate in the form of a liquid or a gel. The liquid- or gel-filled casing may be configured to rupture when the liquid or gel is heated by the RF electromagnetic radiation in the substrate cavity of the resonant chamber. The liquid- or gel-filled casing may also comprise one or more valves configured to open when the liquid or gel is heated, with the heating causing expansion of the liquid/gel within the casing and an increase of pressure within the casing. The one or more valves may be configured to open when a user draws air through the aerosol-generating device. It is highly desirable that the casing be formed to be substantially transparent to RF electromagnetic radiation, to thereby avoid disrupting interaction between RF electromagnetic radiation within the resonant chamber and the aerosol-forming substrate.

The substrate cavity may be configured as a blind cavity having an open end and a closed end, in which at least part of the length of the aerosol-generating article is receivable in the substrate cavity via the open end such that the aerosol-forming substrate is positioned within the substrate cavity. The provision of such a blind cavity is particularly suitable where the aerosol-generating article is elongate in form, resembling the form factor of conventional cigarettes or cigars. By way of example, the aerosol-generating article may comprise a mouth end configured such that, in use, a user may engage their mouth with the mouth end to draw on the article and inhale aerosol evolved from the substrate during heating by the RF electromagnetic radiation.

Conveniently, the aerosol-generating article may comprise a wrapper enclosing the aerosol-forming substrate to define a rod, the rod having a mouth end and a distal end. In use, a user may engage their mouth with the mouth end of the rod to draw on the rod and inhale aerosol evolved from the substrate during heating by the RF electromagnetic radiation. Preferably, the wrapper may be formed of material substantially transparent to RF electromagnetic radiation, thereby reducing the possibility that the wrapper hinders interaction between the RF electromagnetic radiation with the resonant chamber and the aerosol-forming substrate. By way of example, the wrapper may be paper-based. Alternatively, the wrapper may be formed of material substantially opaque to RF electromagnetic radiation, the wrapper further comprising a plurality of slots arranged so as to permit, in use, the RF electromagnetic radiation to enter an interior of the aerosol-generating article. Advantageously, the aerosol-generating article may comprise a radiation shield positioned within the rod between the aerosol-forming substrate and the mouth end so as to obstruct the passage of RF electromagnetic radiation through the article to the mouth end. The radiation shield may be formed of any suitable material which is opaque to RF electromagnetic radiation. By way of example, the radiation shield may comprise any suitable material that is not transparent to RF radiation, such as aluminium, stainless steel, silver or gold. The radiation shield may also be configured to reflect RF electromagnetic radiation. The radiation shield may be fluid-permeable to allow generated aerosol to pass across the shield; by way of example, the radiation shield may comprise a metal mesh.

In a third aspect of the present disclosure, there is provided a method of heating an aerosol-forming substrate to generate an aerosol therefrom by use of the aerosol-generating device as described in any of the preceding paragraphs and those claims corresponding to the first aspect, or the aerosol-delivery system as described in any of the preceding paragraphs and those claims corresponding to the second aspect. The method comprises: positioning the aerosol-forming substrate within the substrate cavity; operating the electromagnetic field generator to generate radio-frequency (RF) electromagnetic radiation having the predetermined frequency composition; and conveying the RF electromagnetic radiation to within the interior of the resonant chamber to heat the aerosol-forming substrate positioned within the substrate cavity.

As described in relation to the first aspect of the present disclosure, preferably the relative permittivity of the filling, the predetermined frequency composition, and dimensions of the resonant chamber are selected such that, in use, the RF electromagnetic radiation having the predetermined frequency composition resonates within the interior of the resonant chamber.

The invention is defined in the claims.

Examples will now be further described with reference to the figures, in which:
Figure 1 shows a schematic illustration of a dielectric heating system.
Figure 2a shows a schematic illustration of a first example of an aerosol-delivery system formed of an aerosol-generating article received within an aerosol-generating device.
Figure 2b shows a schematic illustration of the aerosol-generating device of figure 2a, but without the presence of the aerosol-generating article.
Figure 3 shows a perspective schematic illustration of the resonant chamber of the aerosol-generating device of figures 2a and 2b.
Figure 4 shows an end view of an alternative example of a resonant chamber suitable for use in the aerosol-generating device of figures 2a and 2b.
Figure 5 shows a schematic illustration of an exemplary aerosol-generating article suitable for use with the aerosol-generating device of figures 2a and 2b.
Figure 6a shows a schematic illustration of a second example of an aerosol-delivery system formed of an aerosol-generating article received within an aerosol-generating device.
Figure 6b shows a schematic illustration of the aerosol-generating device of figure 6a, but without the presence of the aerosol-generating article.
Figure 7 shows a schematic illustration of possible configurations for slots formed in a liner of a resonant chamber of an aerosol-generating device.
Figure 8 shows a schematic illustration of a third example of an aerosol-delivery system formed of an aerosol-generating device and an aerosol-generating article.

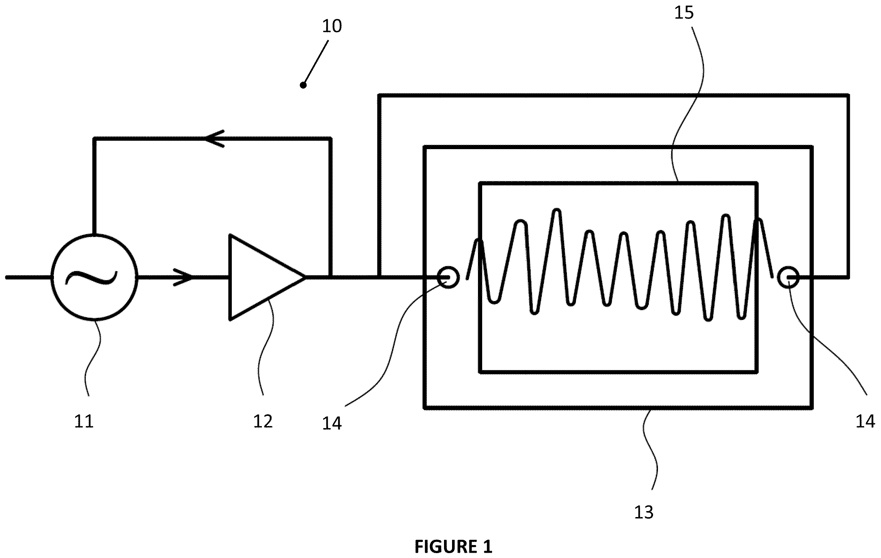

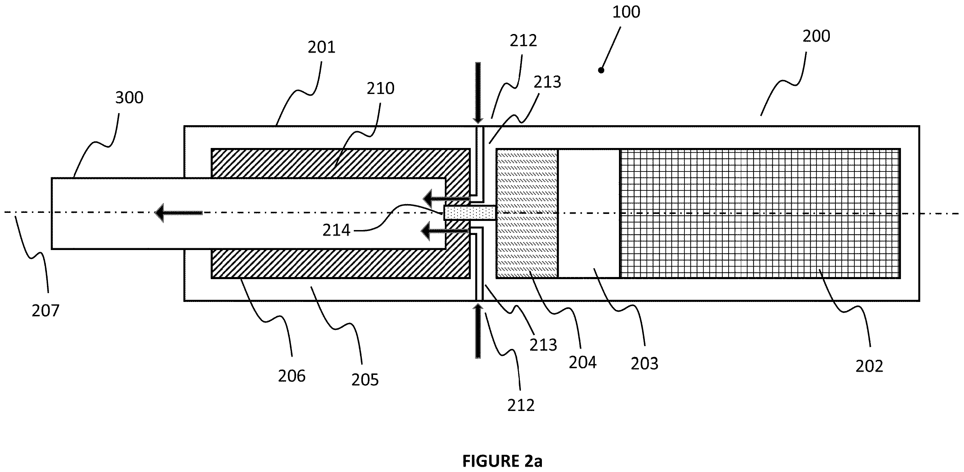

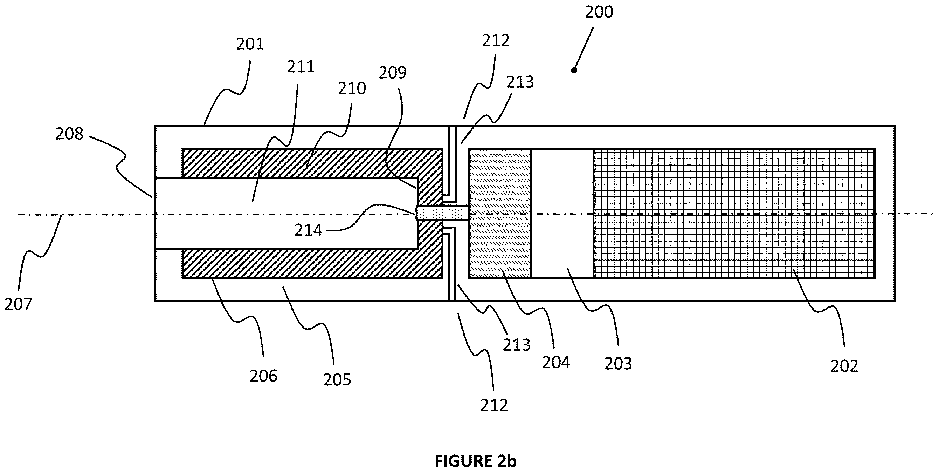

Figure 1 is a schematic illustration of a dielectric heating system 10 using radio-frequency (RF) electromagnetic radiation, sometimes referred to as dielectric heating. The system 10 has a RF electromagnetic signal generator 11, a power amplifier 12 and a heating chamber 13. The power amplifier 12 is connected to the RF electromagnetic signal generator 11 and functions to amplify a RF signal generated by the RF electromagnetic signal generator. Antennae 14 are positioned to extend inside the heating chamber 13. The antennae 14 are connected to an output of the power amplifier 12 and operate to direct the RF signal generated by the RF electromagnetic signal generator 11 to the heating chamber 13, resulting in an oscillating electromagnetic radiation field within the chamber. The output of the power amplifier 12 is fed back to the RF electromagnetic signal generator 11 to provide closed-loop control. An object 15 which is to be heated is placed in the heating chamber 13 and subjected to the RF electromagnetic radiation field. Polar molecules within the object 15 align with the oscillating RF electromagnetic radiation field and are agitated by the oscillating electromagnetic radiation field, resulting in an increase in temperature of the object. This form of heating has an advantage of providing uniform heating throughout the object 15 (provided that the polar molecules are uniformly distributed). It also has an advantage of being a non-contact form of heating, which does not require conduction or convection of heat from a high temperature heating element. The examples described with reference to figures 2 to 8 employ the basic heating principle illustrated in figure 1 and described in this paragraph.

Figure 2a shows a schematic illustration of a first example of an aerosol-delivery system 100. The aerosol-delivery system 100 has an aerosol-generating device 200 and an aerosol-generating article 300. Figure 2b corresponds to figure 2a but without the presence of the aerosol-generating article 300.

The aerosol-generating device 200 has an elongate housing 201. The elongate housing 201 contains a power source 202, control electronics 203, a radio-frequency (RF) electromagnetic field generator 204 and a resonant chamber 205. The electromagnetic field generator 204 includes a solid state transistor. The power source 202 is coupled to the control electronics 203 and the RF electromagnetic field generator 204 to provide power thereto. In the illustrated example, the power source 202 is a rechargeable battery, such as a lithium-ion battery. However, in alternative examples, other suitable power sources may be used; for example, an alternative form of battery or a capacitor.

The resonant chamber 205 has a peripheral wall 206 which is generally cylindrical in form. For the illustrated example, the peripheral wall 206 is formed of aluminium. In an alternative example, the peripheral wall 206 may instead be formed of stainless steel or another material substantially opaque to RF electromagnetic radiation. In a further alternative example, an interior-facing surface of the peripheral wall 206 may be coated with a layer of silver, gold or another material substantially opaque to RF electromagnetic radiation.

The resonant chamber 205 is arranged so that the length of the resonant chamber lies generally along a longitudinal axis 207 of the elongate housing 201. The resonant chamber 205 defines a blind cavity, with an opening 208 at one end of the chamber and an opposite end 209 of the chamber being closed. A dielectric filling 210 formed of alumina is provided within the resonant chamber 205. The alumina dielectric filling 210 has a relative permittivity εᵣ in the range of 9.3 to 11.5. In an alternative example, the dielectric filling may be formed of one or more of MgNb₂O₆, ZnNb₂O₆, MgTa₂O₆, ZnTa₂O₆, and glass. For the example shown in figures 2a and 2b, the dielectric filling 210 is provided as an annular sleeve circumscribing a substrate cavity 211 within the resonant chamber 205. The aerosol-generating article 300 is received in the substrate cavity 211 via the opening 208.

The aerosol-generating device 200 also includes air inlets 212 defined at various locations around the periphery of the elongate housing 201. Passageways 213 extend from the air inlets 212 to openings provided in the closed end 209 of the resonant chamber 205. An antenna 214 extends from the RF electromagnetic field generator 204 into the interior of the resonant chamber 205.

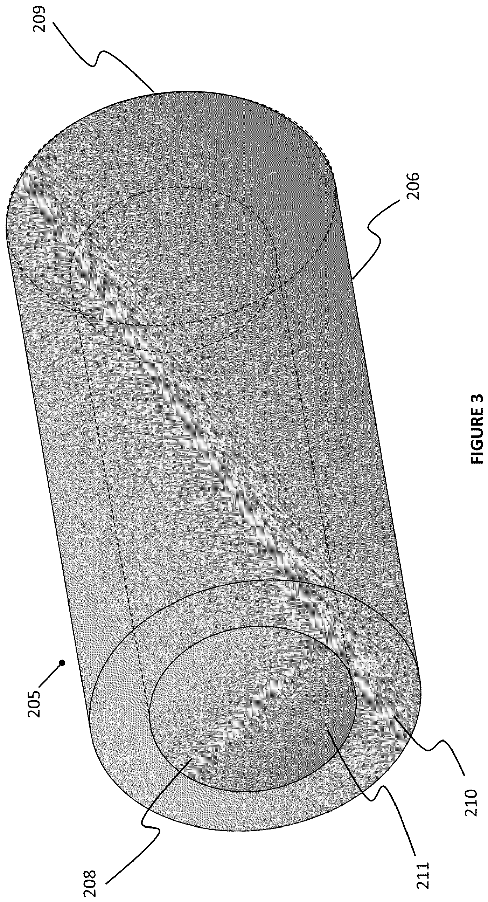

Figure 3 shows a perspective schematic illustration of the resonant chamber 205 of the aerosol-generating device 200 of figures 2a and 2b. Figure 3 shows how the sleeve of dielectric filling 210 continuously circumscribes the substrate cavity 211. The sleeve of dielectric filling 210 is sized so that an outer circumferential surface of the sleeve forms a snug fit against an interior-facing circumferential surface of the peripheral wall 206 of the resonant chamber 205.

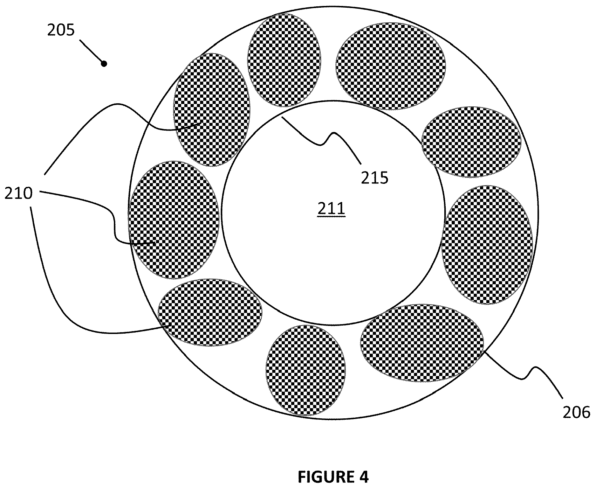

Figure 4 shows an end view of an alternative example of the resonant chamber 205. In this alternative example, the filling 210 is provided as a plurality of discrete clusters of filling material circumferentially spaced-apart from each other so as to discontinuously circumscribe the substrate cavity 211. A liner 215 is provided radially inwards of the clusters of filling material 210. The liner 215 is formed of material substantially transparent to RF electromagnetic radiation and serves to help retain the discrete clusters of the filling material 210 in position. For the example described, the liner 215 is formed of any of Teflon, quartz or polytetrafluoroethylene. However, the liner 215 may be formed of other known materials which are substantially transparent to RF electromagnetic radiation.

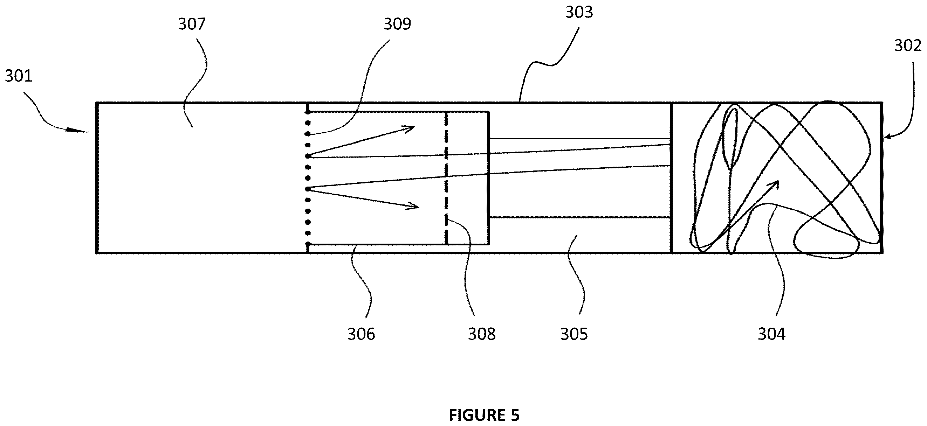

Figure 5 shows a schematic illustration of an example of an aerosol-generating article 300 suitable for use with the aerosol-generating device 200. The aerosol-generating article 300 takes the form of a rod having a mouth end 301 and a distal end 302. The aerosol-generating article 300 includes a paper-based wrapper 303. Sequentially arranged within the wrapper 303 are an aerosol-forming substrate portion 304, a tubular support element 305, an aerosol-cooling element 306, and a mouthpiece filter 307. The aerosol-forming substrate portion 304 is a plug of crimped, reconstituted tobacco containing an aerosol former and water. The support element 305 is a hollow acetate tube. A line of laser perforations 308 are formed through the thickness of the wrapper 303. A metallic mesh radiation shielding element 309 is situated between the mouthpiece filter 307 and the aerosol-cooling element 306.

The operation the aerosol-generating device 200 of figures 2a and 2b with the aerosol-generating article 300 of figure 5 is now described. First, a user positions the aerosol-generating article 300 within the substrate cavity 211 so that the distal end 302 of the article abuts the closed end 209 of the resonant chamber 205. Once so positioned, the plug of aerosol-forming substrate 304 of the article 300 is located wholly within the substrate cavity 211 of the resonant chamber 205 and is circumscribed by the sleeve of dielectric filling 210. The user then activates the aerosol-generating device 200 by pressing a button (not shown) provided on the elongate housing 201. On activation of the device 200, the control electronics 203 initiate the supply of power from the power supply 202 to the RF electromagnetic field generator 204. The antenna 214 then directs a RF electromagnetic radiation field created by the RF electromagnetic field generator 204 into the interior of the resonant chamber 205. For the example shown, the RF electromagnetic field generator 204 is configured to generate an oscillating RF electromagnetic radiation field at a frequency of around 2.45 GHz. However, in alternative examples, the RF electromagnetic field generator 204 may be configured to generate a RF electromagnetic radiation field containing or consisting of one or more other frequencies within the ISM band. In alternative examples, the RF electromagnetic field generator 204 may be configured to generate a RF electromagnetic radiation field having a frequency of between 900 MHz and 2.45 GHz.

Figures 2a and 2b are not drawn to scale. However, the resonant chamber 205 may have a diameter of between 10 millimetres and 50 millimetres, with a diameter of 30 millimetres being preferred in one example. Further, the resonant chamber 205 may have a length of between 5 millimetres and 25 millimetres, with a length of 15 millimetres being preferred in one example. Further, the substrate cavity 211 may have a diameter of between 3 millimetres and 15 millimetres, with a diameter of 7 millimetres being preferred in one example. Further, the substrate cavity 211 may have a length of between 5 millimetres and 25 millimetres, with a length of 15 millimetres being preferred in one example.

The relative permittivity of the alumina dielectric filling 210 serves to reduce the resonant frequencies of the resonant chamber compared to the same resonant chamber lacking any such dielectric filling. The effect of the dielectric filling 210 is that the fundamental resonant frequency of the resonant frequency is at or within +/-10% of 2.45 GHz, i.e. the frequency of the RF electromagnetic field created by the generator 204. Standing waves of the RF electromagnetic radiation field form within the resonant chamber 205, with the waves being reflected off the interior-facing surface of the peripheral wall 206 of the chamber 205 by virtue of the peripheral wall being formed of material substantially opaque to RF electromagnetic radiation. The formation of the standing waves assist in coupling of the RF electromagnetic radiation with the plug of aerosol-forming substrate 304 provided in the interior of the aerosol-generating article 300. Explaining further, the oscillations of the RF electromagnetic radiation within the resonant chamber 205 serve to excite polar molecules present in the plug of aerosol-forming substrate 304, such as the water present within the substrate. The excitement of the polar molecules manifests in heat, with heat spreading throughout the entirety of the plug of aerosol-forming substrate 304. The heating of the plug of aerosol-forming substrate 304 results in vapour being evolved from the substrate.

When the user draws on the mouth end 301 of the aerosol-generating article 300, the suction generated at the mouth end induces an in-flow of external air from outside of the elongate housing 201 through the air inlets 212. This inflow of external air is illustrated with arrows in figure 2a. The air flows along the passageways 213 through the openings provided in the closed end 209 of the resonant chamber 205, and onwards into the interior of the aerosol-generating article 300 via the distal end 302. The air entering the distal end 302 mixes with the vapour evolved from the plug of aerosol-forming substrate 304 to form an aerosol. The suction resulting from the user drawing on the mouth end 301 results in the aerosol being drawn along the interior of the aerosol-generating article 300 (again, illustrated with arrows in figure 2a), along the channel defined by the tubular support element 305 and through the aerosol-cooling element 306 (see figure 5). The suction also induces an inflow of ventilation air through the line of perforations 308 formed in the wrapper 303, thereby assisting in further cooling the aerosol. The aerosol then passes through the mouthpiece filter 307 to be inhaled by the user. The metallic meshed construction of the radiation shielding element 309 serves to allow the aerosol to pass there through and be inhaled by the user, whilst also functioning to reflect any waves of RF electromagnetic radiation which may have entered the aerosol-generating article 300. In this manner, the radiation shield 309 reduces the possibility that the user is directly exposed to RF electromagnetic radiation emanating from the resonant chamber 205.

It will be understood that for a resonant chamber 205 of given size and construction, selection of a different frequency for the RF electromagnetic radiation field generated by the electromagnetic field generator 204 may require the use of a different material for the dielectric filling 210 in order to ensure a close match between the frequency of the RF electromagnetic radiation field and the resonant frequency of the resonant chamber 205 as adjusted by the dielectric filling. By "different material" is meant a material having a different relative permittivity. By way of example, if the electromagnetic field generator 204 were to be adjusted to generate an RF electromagnetic radiation field having a frequency of 900 MHz instead of 2.45 GHz, this would require use of a material for the dielectric filling 210 having a higher relative permittivity in order to adjust the resonant frequencies of the resonant chamber 205 to provide efficient coupling with and heating of the plug of aerosol-forming substrate 304 at this lower frequency.

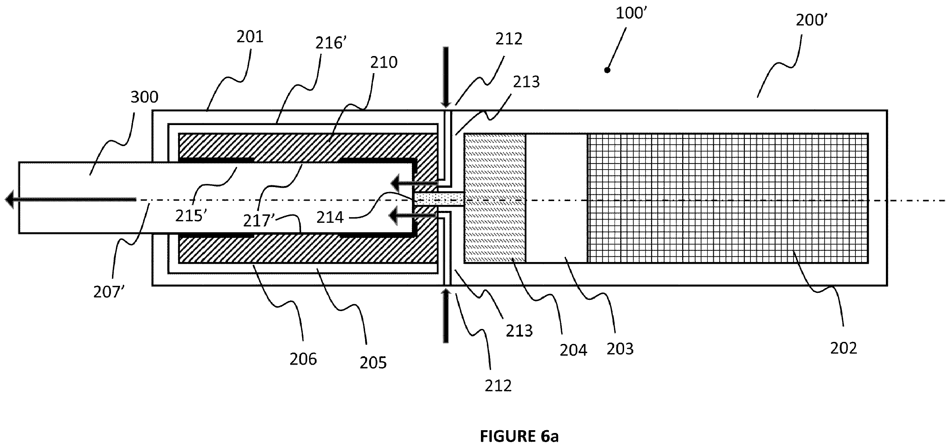

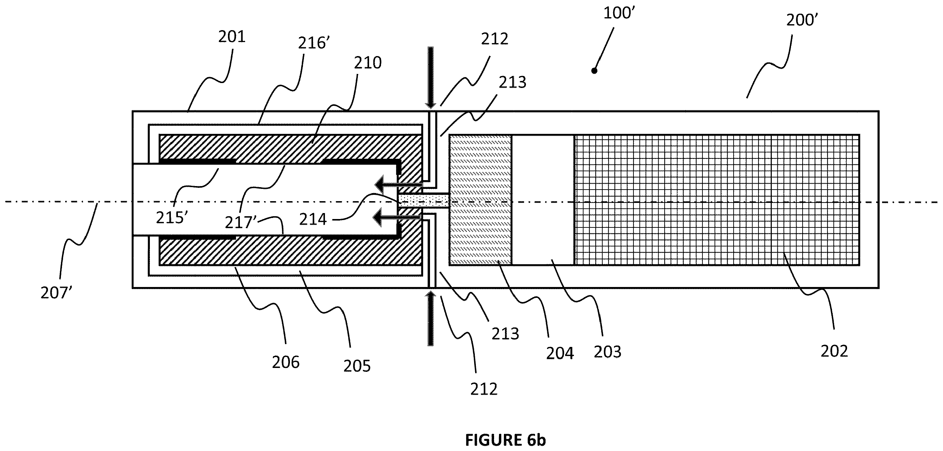

Figure 6a shows a schematic illustration of a second example of an aerosol-delivery system 100'. Where features are unchanged from those of the aerosol-delivery system 100 of figures 2a and 2b, like reference signs are used. The same design of aerosol-generating article 300 is employed for system 100' as has been described for system 100. The aerosol-delivery system 100' includes the combination of aerosol-generating device 200' and aerosol-generating article 300. Figure 6b corresponds to figure 6a, but without the presence of the aerosol-generating article 300. The aerosol-delivery system 100' of figure 6a differs from that of figure 2a in relation to the design of the aerosol-generating device 200'. For device 200', the resonant cavity 205 is circumscribed by a radiation containment chamber 216' formed of material substantially opaque to RF electromagnetic radiation; in this case, the radiation containment chamber is formed of steel. However, other suitable materials which are opaque to RF electromagnetic radiation may be employed instead. The radiation containment chamber 216' provides an additional layer of protection against the escape of RF electromagnetic radiation from the resonant chamber 205. A further difference between device 200' and device 200 is that a slotted liner 215' is employed between the sleeve of dielectric filling 210 and the substrate cavity 211. The provision of slots 217' in the liner 215' permits entry of RF electromagnetic radiation into and out of the substrate cavity 211 of the resonant chamber 205, with the material of the liner offering structural support to the dielectric filling. To reduce the likelihood of the material of the liner 215' hindering RF electromagnetic radiation within the resonant chamber 205, the liner is formed of any of Teflon, quartz or polytetrafluoroethylene. However, the liner 215' may be formed of other known materials which are substantially transparent to RF electromagnetic radiation. In all other respects, the structure of the aerosol-generating device 200' and aerosol-delivery system 100' of figures 6a and 6b corresponds to that of the aerosol-generating device 200 and aerosol-delivery system 100 of figures 2a and 2b. The mode of operation of the aerosol-generating device 200' and aerosol-delivery system 100' of figures 6a and 6b corresponds to that of the aerosol-generating device 200 and aerosol-delivery system 100 of figures 2a and 2b.

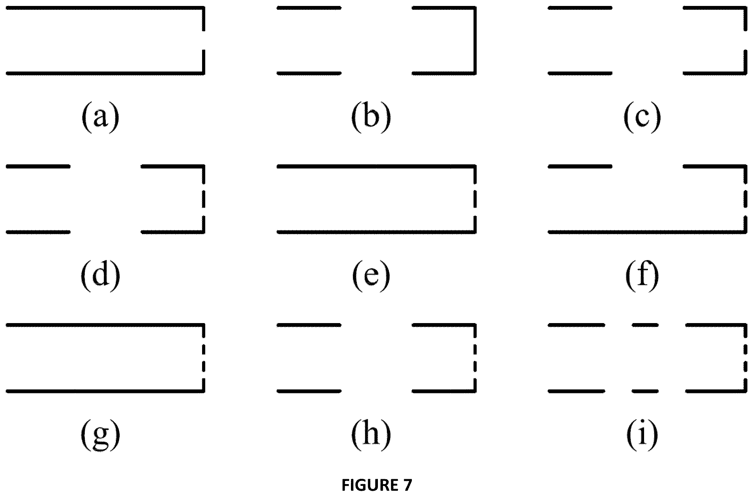

Figure 7 provides a schematic representation of various exemplary configurations for the slots 217' in the slotted liner 215'.

In other examples (not shown), the peripheral wall 206 of the resonant chamber 205 may be provided with a plurality of slots in a similar manner to the liner 215'. The provision of such slots in the peripheral wall 206 of the resonant chamber 205 may allow for entry of the RF electromagnetic radiation into the resonant cavity at various locations about the periphery of the resonant chamber. As an alternative to the use of slots, the peripheral wall 206 of the resonant chamber 205 may instead include a plurality of windows formed of material substantially transparent to RF radiation, with these "windows" providing for entry of RF electromagnetic radiation into the interior of the resonant chamber 205. Where the peripheral wall 206 of the resonant chamber 205 is provided with a plurality of such slots or windows, the slots or windows may have a configuration as shown in figure 7 for the slotted liner 215". If the peripheral wall 206 of the resonant chamber 205 were to include such a plurality of slots or windows, it would be preferred for the resonant chamber 205 to be enclosed within a radiation containment chamber such as the chamber 216' shown in figures 6a and 6b.

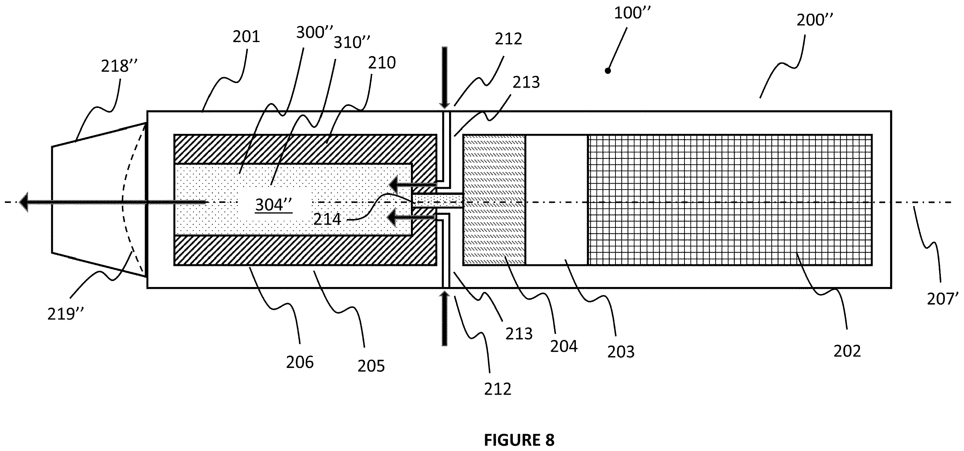

Figure 8 shows a schematic illustration of a third example of an aerosol-delivery system 100". Where features are unchanged from those of the aerosol-delivery system 100 of figures 2a and 2b, like reference signs are used. The aerosol-delivery system 100" of figure 8 differs from that of figures 2a and 2b in both the design of the aerosol-generating device 200" and the aerosol-generating article 300". The aerosol-generating device 200" of figure 8 includes a mouthpiece 219" which is in fluid communication with the substrate cavity 210 of the resonant chamber 205. The mouthpiece 218" closes off one end of the device 200". A metallic mesh radiation shielding element 219" is situated within the mouthpiece 218", with the shielding element extending across the interior of the mouthpiece. The aerosol-generating article 300" employed in the aerosol-delivery system 100" is in the form of a cartridge 310" of aerosol-forming substrate 304". The aerosol-forming substrate 304" consists of crimped, reconstituted tobacco containing an aerosol former and water. However, in an alternative example (not shown), the cartridge 310" is in the form of a casing containing an aerosol-forming substrate in gel or liquid form.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number "A" is understood as "A" ± 10% of "A". Within this context, a number "A" may be considered to include numerical values that are within general standard error for the measurement of the property that the number "A" modifies. The number "A", in some instances as used in the appended claims, may deviate by the percentages enumerated above provided that the amount by which "A" deviates does not materially affect the basic and novel characteristic(s) of the claimed invention. Also, all ranges include the maximum and minimum points disclosed and include any intermediate ranges therein, which may or may not be specifically enumerated herein.

## Claims

1. An aerosol-generating device (200) for heating an aerosol-forming substrate (304) to generate an aerosol therefrom, the device comprising:
an electromagnetic field generator (204) configured to generate radio-frequency (RF) electromagnetic radiation having a predetermined frequency composition;
a resonant chamber (205) comprising a peripheral wall (206) configured to be substantially opaque to RF electromagnetic radiation within the resonant chamber (205);
a filling (210) arranged within an interior of the resonant chamber (205) so as to circumscribe a substrate cavity (211) defined within the resonant chamber (205), the substrate cavity (211) configured to receive the aerosol-forming substrate (304);
the electromagnetic field generator (204) coupled to the resonant chamber (205) so as to convey the RF electromagnetic radiation generated by the electromagnetic field generator (204) to the resonant chamber (205);
the filling (210) having a relative permittivity of greater than one.

2. An aerosol-generating device according to claim 1, in which the filling (210) is or comprises a dielectric.

3. An aerosol-generating device (200) according to either one of claim 1 or claim 2, in which the relative permittivity of the filling, the predetermined frequency composition, and dimensions of the resonant chamber (205) are configured such that, in use, the RF electromagnetic radiation having the predetermined frequency composition resonates within the interior of the resonant chamber (205).

4. An aerosol-generating device (200) according to any one of the preceding claims, in which the filling (210) has a relative permittivity of between 5 and 100.

5. An aerosol-generating device (200) according to any one of the preceding claims, in which the filling (210) has a relative permittivity of between 40 and 50.

6. An aerosol-generating device (200) according to any one of the preceding claims, in which the filling (210) comprises at least one of: alumina, MgNb₂O₆, ZnNb₂O₆, MgTa₂O₆, ZnTa₂O₆, and glass.

7. An aerosol-generating device (200) according to any one of the preceding claims, in which the aerosol-generating device (200) comprises an air inlet (212) configured to receive air from outside of the aerosol-generating device (200), the aerosol-generating device (200) further comprising a fluid flow path (213) extending between the air inlet (212) and the resonant chamber (205) such that such that application of a negative pressure differential between the substrate cavity (211) and the air inlet (212) induces a flow of external air in through the air inlet (212), along the fluid flow path (213), and into the substrate cavity (211).

8. An aerosol-generating device (200) according to any one of the preceding claims, in which the filling (210) comprises a sleeve arranged so as to continuously circumscribe the substrate cavity (211).

9. An aerosol-generating device (200) according to any one of claims 1 to 7, in which the filling (210) comprises a plurality of discrete clusters spaced apart from each other to as to discontinuously circumscribe the substrate cavity (211).

10. An aerosol-generating device (200) according to any one of the preceding claims, in which a periphery of the substrate cavity (211) is defined by a liner (215) configured to be substantially transparent to RF electromagnetic radiation, the liner located between the filling (210) and the substrate cavity (211).

11. An aerosol-generating device (200) according to claim 10, in which the liner (215) comprises material substantially transparent to RF electromagnetic radiation.

12. An aerosol-generating device (200) according to either one of claim 10 or claim 11, in which the liner (215) comprises a plurality of slots arranged so as to, in use, permit entry of the RF electromagnetic radiation into the substrate cavity (211).

13. An aerosol-generating device (200) according to any one of the preceding claims, in which minor portions of the peripheral wall (206) of the resonant chamber (205) are substantially transparent to RF electromagnetic radiation so as to, in use, permit entry of the RF electromagnetic radiation into the resonant chamber (205).

14. An aerosol-generating device (200) according to any one of the preceding claims, in which the resonant chamber (205) has a diameter of between 10 millimetres and 50 millimetres, or between 25 millimetres and 35 millimetres.

15. An aerosol-delivery system (100) for delivering aerosol to a user, the system comprising:
an aerosol-generating device (200) according to any of the preceding claims; and
an aerosol-generating article (300) comprising an aerosol-forming substrate (304).

## Patentansprüche

1. Aerosolerzeugungsvorrichtung (200) zum Erwärmen eines aerosolbildenden Substrats (304) zum Erzeugen eines Aerosols daraus, die Vorrichtung umfassend:
einen elektromagnetischen Feldgenerator (204), ausgelegt zum Erzeugen elektromagnetischer Hochfrequenz(HF)-Strahlung mit einer vorbestimmten Frequenzzusammensetzung;
eine Resonanzkammer (205), umfassend eine Umfangswand (206), ausgelegt, um innerhalb der Resonanzkammer (205) für elektromagnetische HF-Strahlung im Wesentlichen undurchlässig zu sein;
eine innerhalb eines Inneren der Resonanzkammer (205) angeordnete Füllung (210), um einen innerhalb der Resonanzkammer (205) definierten Substrathohlraum (211) zu umhüllen, wobei der Substrathohlraum (211) zum Aufnehmen des aerosolbildenden Substrats (304) ausgelegt ist;
wobei der elektromagnetische Feldgenerator (204) mit der Resonanzkammer (205) zum Übertragen der von dem elektromagnetischen Feldgenerator (204) erzeugten elektromagnetischen HF-Strahlung in die Resonanzkammer (205) gekoppelt ist;
die Füllung (210) eine relative Dielektrizitätskonstante von größer als eins aufweist.

2. Aerosolerzeugungsvorrichtung nach Anspruch 1, wobei die Füllung (210) ein Dielektrikum ist oder umfasst.

3. Aerosolerzeugungsvorrichtung (200) nach einem der Ansprüche 1 oder 2, wobei die relative Dielektrizitätskonstante der Füllung, die vorbestimmte Frequenzzusammensetzung und die Abmessungen der Resonanzkammer (205) derart ausgelegt sind, dass die elektromagnetische HF-Strahlung mit der vorbestimmten Frequenzzusammensetzung bei Gebrauch innerhalb des Inneren der Resonanzkammer (205) resoniert.

4. Aerosolerzeugungsvorrichtung (200) nach einem beliebigen der vorhergehenden Ansprüche, wobei die Füllung (210) eine relative Dielektrizitätskonstante zwischen 5 und 100 aufweist.

5. Aerosolerzeugungsvorrichtung (200) nach einem beliebigen der vorhergehenden Ansprüche, wobei die Füllung (210) eine relative Dielektrizitätskonstante zwischen 40 und 50 aufweist.

6. Aerosolerzeugungsvorrichtung (200) nach einem der vorhergehenden Ansprüche, wobei die Füllung (210) wenigstens eines von Aluminiumoxid, MgNb₂O₆, ZnNb₂O₆, MgTa₂O₆, ZnTa₂O₆ und Glas umfasst.

7. Aerosolerzeugungsvorrichtung (200) nach einem beliebigen der vorhergehenden Ansprüche, wobei die Aerosolerzeugungsvorrichtung (200) einen Lufteinlass (212) aufweist, der zum Aufnehmen von Luft von außerhalb der Aerosolerzeugungsvorrichtung (200) ausgelegt ist, die Aerosolerzeugungsvorrichtung (200) ferner einen Fluidströmungsweg (213) aufweist, der sich zwischen dem Lufteinlass (212) und der Resonanzkammer (205) erstreckt, sodass das Anlegen einer Unterdruckdifferenz zwischen dem Substrathohlraum (211) und dem Lufteinlass (212) einen Strom von Außenluft durch den Lufteinlass (212) entlang des Fluidströmungswegs (213) und in den Substrathohlraum (211) hinein induziert.

8. Aerosolerzeugungsvorrichtung (200) nach einem beliebigen der vorhergehenden Ansprüche, wobei die Füllung (210) eine Hülse umfasst, die zum kontinuierlichen Umhüllen des Substrathohlraums (211) angeordnet ist.

9. Aerosolerzeugungsvorrichtung (200) nach einem der Ansprüche 1 bis 7, wobei die Füllung (210) eine Vielzahl von diskreten Clustern umfasst, die voneinander beabstandet sind, um den Substrathohlraum (211) diskontinuierlich zu umhüllen.

10. Aerosolerzeugungsvorrichtung (200) nach einem beliebigen der vorhergehenden Ansprüche, wobei ein Umfang des Substrathohlraums (211) durch eine Auskleidung (215) definiert ist, die ausgelegt ist, um für elektromagnetische HF-Strahlung im Wesentlichen transparent zu sein, wobei die Auskleidung zwischen der Füllung (210) und dem Substrathohlraum (211) angeordnet ist.

11. Aerosolerzeugungsvorrichtung (200) nach Anspruch 10, wobei die Auskleidung (215) ein für elektromagnetische HF-Strahlung im Wesentlichen transparentes Material umfasst.

12. Aerosolerzeugungsvorrichtung (200) nach einem der Ansprüche 10 oder 11, wobei die Auskleidung (215) eine Vielzahl von Schlitzen aufweist, die derart angeordnet sind, dass sie bei Gebrauch den Eintritt der elektromagnetischen HF-Strahlung in den Substrathohlraum (211) ermöglichen.

13. Aerosolerzeugungsvorrichtung (200) nach einem beliebigen der vorhergehenden Ansprüche, wobei kleinere Abschnitte der Umfangswand (206) der Resonanzkammer (205) für elektromagnetische HF-Strahlung im Wesentlichen transparent sind, um bei Gebrauch den Eintritt der elektromagnetischen HF-Strahlung in die Resonanzkammer (205) zu ermöglichen.

14. Aerosolerzeugungsvorrichtung (200) nach einem beliebigen der vorhergehenden Ansprüche, wobei die Resonanzkammer (205) einen Durchmesser zwischen 10 Millimeter und 50 Millimeter oder zwischen 25 Millimeter und 35 Millimeter aufweist.

15. Aerosolabgabesystem (100) zur Abgabe von Aerosol an einen Benutzer, das System umfassend:
eine Aerosolerzeugungsvorrichtung (200) nach einem beliebigen der vorhergehenden Ansprüche; und
einen aerosolerzeugenden Artikel (300), der ein aerosolbildendes Substrat (304) umfasst.

## Revendications

1. Dispositif de génération d'aérosol (200) pour le chauffage d'un substrat formant aérosol (304) pour générer un aérosol à partir de celui-ci, le dispositif comprenant :
un générateur de champ électromagnétique (204) configuré pour générer un rayonnement électromagnétique radiofréquence (RF) ayant un faisceau de fréquence prédéterminé ;
une chambre de résonance (205) comprenant une paroi périphérique (206) configurée pour être sensiblement opaque au rayonnement électromagnétique RF au sein de la chambre de résonance (205) ;
un remplissage (210) agencé au sein d'un intérieur de la chambre de résonance (205) de manière à entourer une cavité de substrat (211) définie au sein de la chambre de résonance (205), la cavité de substrat (211) étant configurée pour recevoir le substrat formant aérosol (304) ;
le générateur de champ électromagnétique (204) couplé à la chambre de résonance (205) de manière à acheminer le rayonnement électromagnétique RF généré par le générateur de champ électromagnétique (204) vers la chambre de résonance (205) ;
le remplissage (210) ayant une permittivité relative supérieure à un.

2. Dispositif de génération d'aérosol selon la revendication 1, dans lequel le remplissage (210) est ou comprend un diélectrique.

3. Dispositif de génération d'aérosol (200) selon l'une quelconque de la revendication 1 ou de la revendication 2, dans lequel la permittivité relative du remplissage, le faisceau de fréquence prédéterminé et les dimensions de la chambre de résonance (205) sont configurés de telle sorte que, en utilisation, le rayonnement électromagnétique RF ayant le faisceau de fréquence prédéterminé résonne au sein de l'intérieur de la chambre de résonance (205).

4. Dispositif de génération d'aérosol (200) selon l'une quelconque des revendications précédentes, dans lequel le remplissage (210) a une permittivité relative d'entre 5 et 100.

5. Dispositif de génération d'aérosol (200) selon l'une quelconque des revendications précédentes, dans lequel le remplissage (210) a une permittivité relative d'entre 40 et 50.

6. Dispositif de génération d'aérosol (200) selon l'une quelconque des revendications précédentes, dans lequel le remplissage (210) comprend au moins l'un parmi : alumine, MgNb₂O₆, ZnNb₂O₆, MgTa₂O₆, ZnTa₂O₆ et verre.

7. Dispositif de génération d'aérosol (200) selon l'une quelconque des revendications précédentes, dans lequel le dispositif de génération d'aérosol (200) comprend une entrée d'air (212) configurée pour recevoir de l'air depuis l'extérieur du dispositif de génération d'aérosol (200), le dispositif de génération d'aérosol (200) comprenant en outre un trajet d'écoulement de fluide (213) s'étendant entre l'entrée d'air (212) et la chambre de résonance (205) de telle sorte que l'application d'un différentiel de pression négatif entre la cavité de substrat (211) et l'entrée d'air (212) induit un écoulement d'air externe à travers l'entrée d'air (212), le long du trajet d'écoulement de fluide (213) et jusque dans la cavité de substrat (211).

8. Dispositif de génération d'aérosol (200) selon l'une quelconque des revendications précédentes, dans lequel le remplissage (210) comprend un manchon agencé de manière à entourer en continu la cavité de substrat (211).

9. Dispositif de génération d'aérosol (200) selon l'une quelconque des revendications 1 à 7, dans lequel le remplissage (210) comprend une pluralité d'agrégats discrets espacés les uns des autres de manière à entourer de manière discontinue la cavité de substrat (211).

10. Dispositif de génération d'aérosol (200) selon l'une quelconque des revendications précédentes, dans lequel une périphérie de la cavité de substrat (211) est définie par une doublure (215) configurée pour être sensiblement transparente au rayonnement électromagnétique RF, la doublure étant située entre le remplissage (210) et la cavité de substrat (211).

11. Dispositif de génération d'aérosol (200) selon la revendication 10, dans lequel la doublure (215) comprend un matériau sensiblement transparent au rayonnement électromagnétique RF.

12. Dispositif de génération d'aérosol (200) selon l'une ou l'autre de la revendication 10 ou de la revendication 11, dans lequel la doublure (215) comprend une pluralité de fentes agencées de manière à permettre, en utilisation, l'entrée du rayonnement électromagnétique RF dans la cavité de substrat (211).

13. Dispositif de génération d'aérosol (200) selon l'une quelconque des revendications précédentes, dans lequel des portions mineures de la paroi périphérique (206) de la chambre de résonance (205) sont sensiblement transparentes au rayonnement électromagnétique RF de manière à permettre, en utilisation, l'entrée du rayonnement électromagnétique RF dans la chambre de résonance (205).

14. Dispositif de génération d'aérosol (200) selon l'une quelconque des revendications précédentes, dans lequel la chambre de résonance (205) a un diamètre d'entre 10 millimètres et 50 millimètres, ou entre 25 millimètres et 35 millimètres.

15. Système de libération d'aérosol (100), pour distribuer de l'aérosol à un utilisateur, le système comprenant :
un dispositif de génération d'aérosol (200) selon l'une quelconque des revendications précédentes ; et
un article de génération d'aérosol (300) comprenant un substrat formant aérosol (304).
